Europäisches Patentamt

European Patent Office

Office européen des brevets

(19)

(11) Veröffentlichungsnummer : **0 181 557**
**B1**

(12) **EUROPÄISCHE PATENTSCHRIFT**

(45) Veröffentlichungstag der Patentschrift :
13.04.88

(51) Int. Cl.⁴ : **B 29 C 59/04**, B 21 B 33/00

(21) Anmeldenummer : 85113710.9

(22) Anmeldetag : 28.10.85

(54) **Elektrisch angetriebener Walzenstuhl.**

(30) Priorität : 07.11.84 DE 3440673

(43) Veröffentlichungstag der Anmeldung :
21.05.86 Patentblatt 86/21

(45) Bekanntmachung des Hinweises auf die Patenterteilung : 13.04.88 Patentblatt 88/15

(84) Benannte Vertragsstaaten :
BE CH DE FR GB IT LI LU NL

(56) Entgegenhaltungen :
DE-A- 2 123 507
DE-B- 1 504 723
US-A- 3 904 857
US-A- 4 207 567

(73) Patentinhaber : F.B. LEHMANN Maschinenfabrik
GmbH
Daimlerstrasse 12
D-7080 Aalen (DE)

(72) Erfinder : Mack, Hermann
Klingenberg 14
D-7096 Neuler (DE)

(74) Vertreter : Kern, Wolfgang Dipl.-Ing. et al
Patentanwälte Tischer, Kern & Brehm Albert-Ross-
haupter-Strasse 65
D-8000 München 70 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen elektrisch angetriebenen Walzenstuhl zur Verarbeitung pastöser Massen, gemäß dem Oberbegriff des Patentanspruchs.

Bei der Verarbeitung von pastösen Massen ist nicht nur darauf zu achten, daß das Walzgut während der gesamten Chargendurchgangszeit eine gleichmäßige und hohe Qualität aufweist, sondern daß auch der Walzenstuhl vor Beschädigung oder sogar Zerstörung durch Trockenlauf geschützt wird, der immer dann zu befürchten ist, wenn die Walzgutzufuhr nicht so geregelt wird, daß der Walzenspalt offen bleibt.

Verschleißüberwachungsvorrichtungen sind im Hinblick auf Werkzeugmaschinen aus der US-A-4 207 567 bekannt, die sich jedoch nicht für Trockenlaufsicherungen an Walzstühlen eignen, da es sich bei der Vermeidung des Trockenlaufs bei der Verarbeitung pastöser Massen nicht nur um ein Steuer- oder Einstellproblem bezüglich des Walzenspaltes handelt, sondern um ein sich auf die Beschaffenheit der den Spalt durchlaufenden pastösen Masse auswirkendes Problem. Dies leuchtet ein, wenn man bedenkt, daß im Walzenspalt Druckkräfte auf die pastöse Masse übertragen werden, die durch die Walzenbewegung in Scherkräfte innerhalb der Masse umgesetzt werden, wodurch diese qualitativ verändert wird, und zwar gewöhnlich nicht nur durch Wärmeentwicklung, sondern auch durch Strecken oder Zerreißen von Molekülketten, beispielsweise bei der Verarbeitung von Kakaomassen.

Es sind ferner Trockenlaufsicherungen an Walzenstühlen bekannt, bei denen mit Hilfe eines auf die Oberfläche der im Walzenspalt befindlichen Materialmasse angeordneten Schwimmers über einen Schalter eine das Walzgut in den Spalt fördernde Dosierpumpe innerhalb eines festgelegten Höhenbereiches ein- und ausgeschaltet wird. Eine solche Vorrichtung arbeitet jedoch träge. Darüberhinaus sind Schwimmer für pastöse Massen problematisch, da sich solche Massen anders verhalten als Flüssigkeiten und nicht in jedem Fall sich auf einen horizontalen Massenspiegel im Spalt einpendeln. Die Verwendung von elektrischen Sensoren anstelle eines mechanischen Schwimmers mit angeschlossenem mechanischen Schaltglied kann gleichfalls nicht voll befriedigen, da diese Sensoren schnell verschmutzen und somit störanfällig sind, wodurch die Meßgenauigkeit erheblich beeinträchtigt wird.

Die Aufgabe der Erfindung besteht deshalb darin, den Walzenstuhl der genannten Art so weiterzubilden, daß seine Trockenlaufsicherung nicht nur den Walzenspalt im Hinblick auf die Vermeidung des Trockenlaufs steuert, sondern auch die Überwachung und Steuerung des Walzenspaltes zum Erhalt der Produktqualitäten bei der Verarbeitung von pastösen Massen mit großer Genauigkeit und praktisch verzögerungsfrei während des Walzenbetriebs sicherstellt.

Diese Aufgabe wird gemäß dem Kennzeichen des Patentanspruchs gelöst.

Erfindungsgemäß wird also zur Sicherstellung, daß in dem Walzenspalt ständig eine ausreichende Gutmenge vorhanden ist, so daß der Spalt nicht auf Null gehen kann, der vom Walzenantriebsmotor aufgenommene Strom überwacht, der für den Fall eines Trockenlaufs um ein Mehrfaches die Stärke übersteigt, die bei normalem Walzenbetrieb auftritt, weil beim Trockenlauf zwischen den sich direkt berührenden Walzenoberflächen sehr viel höhere Reibungskräfte auftreten als zwischen den Walzenoberflächen und dem im Walzenspalt befindlichen Gut. Die Vorrichtung ist jedoch nicht so geartet, daß sie erst dann den Motorstrom abschaltet, wenn Trockenlauf eintritt, sondern bereits dann, wenn der Walzenspalt noch mit einer gewissen Gutmenge gefüllt ist. Dieser untere Grenzwert wird für jedes Walzgut in bezug auf den Sollwert der Stromaufnahme bei normalem Walzbetrieb festgesetzt. Durch eine Vergleichsvorrichtung wird dann während des Betriebs der Istwert der Stromaufnahme ständig mit dem Sollwert verglichen und führt bei Erreichen der unteren oder oberen Grenze des festgelegten Toleranzbereiches zur Abgabe eines Signals, durch das ein Schaltrelais betätigt wird, das die Stromzufuhr zum Antriebsmotor des Walzenstuhl unterbricht.

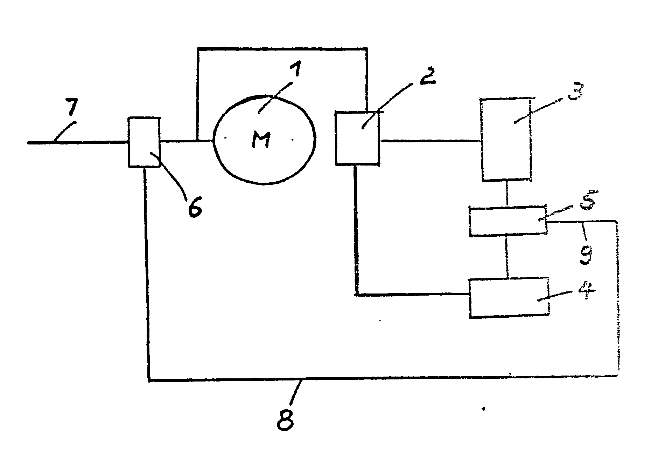

Aus dem in der Zeichnung dargestellten Schaltschema der erfindungsgemäßen Vorrichtung zum Schutz vor Trockenlauf eines Walzwerks ist zu erkennen, daß Herstellung und Betrieb einer solchen Vorrichtung einen vergleichsweise geringen Kostenaufwand mit sich bringen, der in keinem Verhältnis steht zu den Schäden, die entstehen, wenn die Walzen trockenlaufen.

In der Zeichnung ist mit 1 der Antriebsmotor eines Walzenstuhls an sich beliebiger Bauart bezeichnet, der über die Leitung 7 und ein Schaltrelais 6 mit Strom gespeist wird. Der cos φ des Motors und damit seine Leistungsaufnahme werden mit dem in den Motorstromkreis geschalteten Meßgerät 2 gemessen. Die Leistungsaufnahme hängt in erster Linie von der Beschaffenheit des Walzgutes ab, insbesondere seiner Zähigkeit, ist also für verschiedene Walzgüter verschieden groß.

Die Messung der Leistungsaufnahme geschieht dann, wenn der Motor hochgelaufen ist und sich am Walzenstuhl ein stabiler Betriebszustand eingestellt hat, die Leistungsaufnahme also in etwa konstant ist. Die gemessene Stromaufnahme wird als Sollwert in dem Sollwertspeicher 3 abgespeichert. Sie dient als Vergleichswert für die danach in Intervallen momentan durchgeführte Strommessung. Diese gemessenen Istwerte werden in dem Vergleicher 4 mit dem gespeicherten Sollwert verglichen, wobei vorher ein Toleranzbereich für die zulässigen Istwert-Schwankungen festgelegt wurde. Erreicht der Istwert während des Walzenbetriebs die obere oder untere Grenze dieses Toleranzbereiches, so wird in dem Grenzwertgeber 5 ein Signal erzeugt, das an dessen Ausgang 9 erscheint und über die Leitung 8 das Schaltrelais 6 ansteuert, wodurch die Stromzufuhr zum Motor 1 unterbrochen wird. Dadurch wird das Walzwerk stillgesetzt, noch bevor Trockenlauf eintreten kann.

## Patentanspruch

Elektrisch angetriebener Walzenstuhl zur Verarbeitung pastöser Massen, der mit einer Steuerung des Walzenspaltes und einer Sicherung gegen den Walzentrockenlauf versehen ist, dadurch gekennzeichnet, daß die Sicherung gegen den Walzentrockenlauf eine Motorleistungsmeßeinrichtung ist, aufgrund derer durch Überwachung des vom Walzenantriebsmotor aufgenommenen Stroms ein ständiger Durchgang von pastöser Masse durch den Walzenspalt aufrechterhaltbar ist, wobei nach dem Hochfahren des Walzenantriebs (1) und dem Erreichen eines stabilen, von der Art der zu verarbeitenden pastösen Masse abhängigen Betriebszustandes die Leistung des Antriebsmotors als Sollwert in einem Sollwertspeicher (3) speicherbar und dieser Sollwert bei dem nachfolgenden Walzenbetrieb in einem Vergleicher (4) mit dem Istwert der Leistungsaufnahme des Antriebsmotors vergleichbar ist und mittels eines Grenzwertgebers (5) der Walzenbetrieb bei Abweichung des Istwertes vom gespeicherten Sollwert innerhalb eines durch einen oberen und einen unteren Grenzwert festgelegten Toleranzbereiches noch vor dem Trockenlauf der Walzen stillsetzbar ist.

## Claim

Electrically driven rolling mill for the treatment of pasty masses, comprising means for controlling the rolling gap and for securing the avoidance of dry-running of the rolls, characterized in that the means for securing avoidance of dry-running of the rolls is a device for measuring the output of the motor, by which a constant throughput of pasty masses through the rolling gap is maintained by watching the current received by the driving motor of the rolls, so that after speeding up the driving means (1) of the rolls and reaching a stable operation condition independent from the type of the pasty mass to be treated the output of the driving motor is stored as a nominal value in a nominal value storage (3) and the said nominal value is compared during the following rolling operation within a comparator (4) with the actual value of the output received by the driving motor and by which by means of a limit value sensor (5) the rolling operation is stopped prior to the dry-running of the rolls in case the actual value differs from the stored nominal value within a range of tolerances determined by an upper and a lower limiting value.

## Revendication

Laminoir entraîné électriquement destiné au façonnage de masses spongieuses, pourvu d'un système de commande du passage et de protection contre la marche à sec, caractérisé en ce que le système de protection contre la marche à sec consiste en un dispositif de mesure de la puissance absorbée qui permet, par la surveillance de la puissance absorbée par le moteur d'entraînement du laminoir, de maintenir un débit stable de la masse spongieuse dans le passage, tandis qu'après que le moteur (1) ait atteint sa vitesse maximale et le laminoir un régime stable dépendant de la nature de la masse spongieuse à laminer, l'on enregistre la puissance absorbée du moteur d'entraînement en tant que valeur de consigne dans la mémoire (3), l'on compare à l'aide d'un comparateur (4), pendant l'opération de laminage, avec la valeur réelle de la puissance absorbée, et l'on arrête le laminoir avant qu'il ne fonctionne à sec à l'aide d'un signal produit par l'émetteur (5) quand l'écart entre la valeur réelle et la valeur de consigne sort de la plage de tolérance définie par une limite supérieure et une limite inférieure.